# EUROPEAN PATENT SPECIFICATION

(11) **EP 2 080 054 B1**
(45) Date of publication and mention of the grant of the patent: **06.06.2012**
(21) Application number: 07826794.5
(22) Date of filing: 19.10.2007
(51) Int. Cl.: H04N 5/64, G09F 7/18, F16B 5/02, B25B 11/00, F16B 2/22, B25B 5/16

(54) **A FIXING STRUCTURE**
BEFESTIGUNGSSTRUKTUR
STRUCTURE DE FIXATION

(30) Priority: 20.10.2006 TR 200605919
(43) Date of publication of application: 22.07.2009
(73) Proprietor: ARÇELIK A.S., 34950 Istanbul (TR)
(72) Inventor: GULER, Cemal, 34950 Istanbul (TR)
(86) International application number: PCT/IB2007/054256
(87) International publication number: WO 2008/047328

(56) References cited:
- EP-A- 0 406 156
- DE-A1- 2 641 789
- JP-A- 2001 091 928
- JP-A- 2005 044 247
- US-A1- 2001 019 377

## Description

Field of Invention

This invention is related to a fixing structure used for mounting display panels and any other panels on a plane.

Prior Art

Flat panels such as LCD (Liquid Crystal Display), PDP (Plasma Display Panel) are widely used with several electronic devices and television receivers. However, currently, thickness of the LCD panels and PDP panels in the market may be various due to necessary technical reasons. This requires using special fixing structures with specific properties for each panel.

JP2001091928 and JP2005044247, related to the state of the art, disclosed various apparatus for mounting LCD panels. The said apparatus comprises spring parts adapting the flexibility values in accordance with the changing thickness of the panels. Further fixing structures for mounting panels on a plane are e.g. known from the documents US-A-2001/0019377, JP-A-2007188029 and US-B-6175396.

Brief Description of the Invention

Fixing structure of the invention enables fixation of panels with different thicknesses on a plane. On the other hand, it ensures fixing without applying pressure on the panel.

Detailed Description of the Invention

The fixing structure developed to achieve the object of the invention is illustrated in the accompanying drawings, in which:

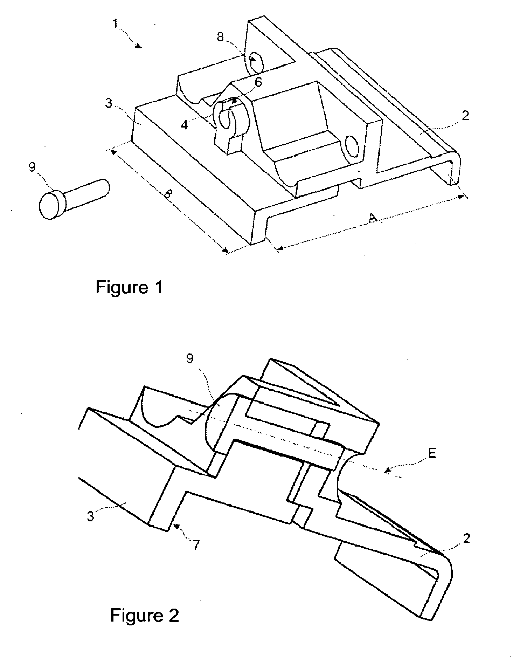

Figure 1 is a perspective view in which the fixing structure is shown according to the invention is partly open.

Figure 2 is a cross-sectional perspective view of the fixing structure according to the invention.

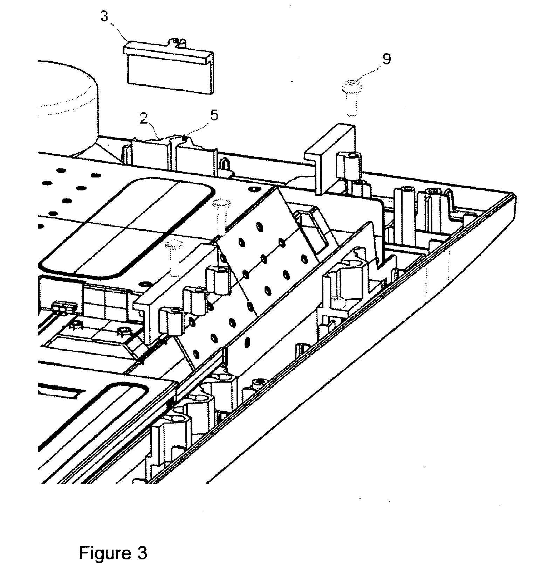

Figure 3 is a view of an embodiment of the fixing structure according to the invention.

The parts in the figures are each given reference numerals as follows:

1. Fixing structure

2. Female part

3. Male part

4. Bearing

5. Hole

6. Groove

7. Claw

8. Retaining hole

9. Screw

The fixing structure (1) according to the invention is composed of basically a female part (2) and a male part (3). Furthermore, female part (2) comprises a retaining hole (8) in order to be fixed on the cover on which the panel will be mounted and a hole (5) in which the male part (3) will be fixed. Moreover, the male part (3) comprises a bearing (4) enabling the fixation within the hole (5) and a claw (7) holding the panel.

The female part (2) is fixed on a cover as mentioned above. Female part (2) may comprise more than one retaining holes (8) depending on the cover structure. To mount the male part (3) on the female part (2), bearing (4) -a structure of male (3) part- is inserted in the hole (5).

The common axis (E) shared by the hole (5) and bearing (4), is the operating axis (E) of the fixing structure (1). After fixation of female part (2) operating aperture (A) can be adapted in order to ensure fixation of panels with different thickness as the male part (3) moves to and for along the operating axis (E).

The bearing (4) maintains a "C" form with a hole in its center and a groove (6) on one side. External diameter of the bearing (4) and internal diameter of the hole (5) is slightly different to ensure their fitting together easily. However, the bearing (4) can be extended from the side on which groove (6) is located by means of a screw (9) which will be inserted into the hole on the bearing (4) so that bearing (4) is tightly fixed within the hole (5).

As a result of being fixed by the bearing (4) and the hole (5), male part (3) is fixed on the female part (2) and cover along the operating axis (E). In order to ensure fixation, tip of the screw (9) proceeding through the bearing (4) enters in the bottom of the hole (5) located in the female part (2). Fixing structure (1) is holding the panel located above the cover by means of the claw (7) on the male part (3) part. Claw (7) is a plane protruding from the male (3) part perpendicular to operating axis (E) and touching on the panel through the contact width (B). Claw (7) is seated on the panel in parallel to the cover plane and does not apply more pressure than the gaps in which male part (3) and female part (2) are fixed.

A gasket may be placed on the side facing top of the panel in order that the claw (7) does not damage the panel, and that the pressure force can be adjusted

Contact width (B) and operating aperture (A) of the fixing structure (1) can be arranged depending to the panel to which it is fixed. Due to the compression occurred once the screw (9) is inserted in the bearing (4), male part (3) rests in the same position along the operating axis (E). Hence, contact width (B) and operating gap (A) rest also fixed in a certain width in accordance with the thickness of the panel. Moreover, it is possible to adjust number and size of the holes (5) and bearings (4) as well as the contact width.

## Claims

1. A fixing structure (1) for mounting display panels on a mounting cover; comprising a female part (2) and a male part (3) and a screw (9), whereby:
- the female part (2) having at least a retaining hole (8) in order to be fixed on a mounting cover and a hole (5) for fixing the male part (3) on it,
- the male part (3) having a bearing (4) in order to fix the male part (3) inside the hole (5) located on the female part (2) by inserting the bearing (4) in the hole (5) of the female part (2) whereby the hole (5) and the bearing (4) share a common axis (E) being the operating axis (E) of the fixing structure (1),
- the male part (3) further having a claw (7) holding the panel to be fixed on the mounting cover,
- the bearing (4) being movable in the hole along the operating axis (E),
- wherein said bearing (4) maintains a "C" form with a hole in its center and a groove (6) on one side, the external diameter of the bearing and the internal diameter of the hole (5) of the female part being slightly different and the bearing (4) being extendable from the side on which the groove (6) is located by means of the screw (9) to be inserted into the hole of the bearing (4) with the bearing resting in the same position along the operating axis (E) so that the bearing (4) is tightly fixed within the hole of the female part (5).

2. A fixing structure (1) according to the Claim 1 in which an operating aperture (A) can be adjusted depending on the thickness of the panel.

3. A fixing structure (1) according to Claim 1 whereby the claw (7) includes a gasket on the side facing the panel preventing the claw (7) from damaging the panel.

## Patentansprüche

1. Befestigungsstruktur (1) zum Anbringen von Anzeigetefeln an einer Montageabdeckung; umfassend ein Aufnahmeteil (2) und ein Einsteckteil (3) und eine Schraube (9), wobei:
- das Aufnahmeteil (2) wenigstens eine Halteöffnung (8) zum Befestigen an einer Montageabdeckung und eine Öffnung (5) zum Befestigen des Einsteckteils (3) daran aufweist,
- das Einsteckteil (3) ein Lager (4) zum Befestigen des Einsteckteils (3) in der Öffnung (5) am Aufnahmeteil (2) aufweist, indem das Lager (4) in die Öffnung (5) des Aufnahmeteils (2) eingeführt wird, wobei die Öffnung (5) und das Lager (4) eine gemeinsame Achse (E) aufweisen, bei der es sich um die Betätigungsachse (E) der Befestigungsstruktur (1) handelt,
- das Einsteckteil (3) ferner eine Klaue (7) aufweist, die die zu befestigende Tafel an der Montageabdeckung hält,
- das Lager (4) in der Öffnung (5) an der Betätigungsachse (E) entlang beweglich ist,
- wobei das Lager (4) eine "C"-Form mit einer Öffnung in der Mitte und einer Nut (6) auf einer Seite aufweist, wobei der Außendurchmesser des Lagers (4) und der Innendurchmesser der Öffnung (5) des Aufnahmeteils (2) geringfügig voneinander abweichen und das Lager (4) von einer Seite, auf der die Nut (6) angeordnet ist, mithilfe der Schraube (9), die in die Nase des Lagers (4) eingeführt wird, erweiterbar ist, wobei das Lager (4) in der gleichen Position entlang der Betätigungssachse (E) ruht, derart, dass das Lager (4) fest in der Öffnung (5) des Aufnahmeteils (2) fixiert ist.

2. Befestigungsstruktur (1) nach Anspruch 1, wobei eine Betätigungsöffnung (A) abhängig von der Dicke und der Größe der Tafel justiert werden kann.

3. Befestigungsstruktur (1) nach Anspruch 1, wobei die Klaue (7) eine Dichtscheibe auf der Seite aufweist, die der Tafel zu gewandt ist, die verhindert, dass die Klaue (7) die Tafel beschädigt.

## Revendications

1. Une structure de fixation (1) pour monter des panneaux d'affichage sur un couvercle de montage ; comprenant une pièce femelle (2) et une pièce mâle (3) et une vis (9), où
- la pièce femelle (2) a au moins one trou de retenue (8) pour être fixée sur un couvercle de montage et un trou (5) pour fixer la pièce mâle (3) sur celle-ci,
- la pièce male (3) a un palier (4) pour fixer la pièce mâle (3) dans le trou (5) situé sur la pièce femelle (2) par l'insertion du palier (4) dans le trou (5) de la pièce femelle (2) où le trou (5) et le palier (4) partagent un axe commun (E) qui est l'axe de fonctionnement (E) de la structure de fixation (1),
- la pièce mâle (3) a en outre un crochet (7) qui maintient le panneau à être fixé sur le couvercle de montage,
- le palier (4) peut se déplacer dans le trou (5) le long de l'axe de fonctionnement (E),
- dans lequel ledit palier (4) a en forme de "C" avec un trou en son centre et une rainure (6) sur un côté, le diamètre extérieur du palier (4) et le diamètre intérieur du trou (5) du la pièce femelle (2) étant légèrement différents et le palier (4) étant extensible de côté sur lequel la rainure (6) est située par l'insertion de la vis (9) dans le nez du palier (4) avec le palier (4) restant dans la même position le long de l'axe de fonctionnement (E) de telle sorte que le palier (4) est fixé fermement dans le trou (5) de la pièce femelle (2).

2. Une structure de fixation (1) selon la Revendication 1, où une ouverture de fonctionnement (A) peut être ajustée en fonction de l'épaisseur et la taille du panneau.

3. Une structure de fixation (1) selon la Revendication 1, où le crochet (7) comprend un joint d'étanchéité sur le côté tourné vers le panneau qui empêche le crochet (7) d'endommager le panneau.
